# EUROPÄISCHE PATENTSCHRIFT

(11) **EP 1 817 952 B1**
(45) Veröffentlichungstag und Bekanntmachung des Hinweises auf die Patenterteilung: **21.06.2017**
(21) Anmeldenummer: 07002393.2
(22) Anmeldetag: 03.02.2007
(51) Int. Cl.: A01B 43/00, A01D 33/04

(54) **Maschine zum Aufnehmen und Behandeln von Ackerboden**
Machine for grabbing and treating cropping soil
Machine destinée à recevoir et à traiter des terres labourables

(30) Priorität: 11.02.2006 DE 102006006385
(43) Veröffentlichungstag der Anmeldung: 15.08.2007
(73) Patentinhaber: Grimme Landmaschinenfabrik GmbH & Co. KG, 49401 Damme (DE)
(72) Erfinder: Kalverkamp, Klemens, 49401 Damme (DE)
(74) Vertreter: Pott, Ulrich

(56) Entgegenhaltungen:
- EP-A- 0 654 208
- WO-A-98/00002
- FR-A- 2 335 142
- GB-A- 754 400
- US-A- 4 313 502
- US-A- 5 630 476

## Beschreibung

Die Erfindung betrifft eine Maschine zum Aufnehmen und Behandeln eines insbesondere Steine, Kluten o. dgl. Festkörper enthaltenden Ackerbodens gemäß dem Oberbegriff des Anspruchs 1.

Bekannte Maschinen dieser Art (GB 754 400; EP 0 654 208 A1; US, 4,313,502) sind als verfahrbare landwirtschaftliche Arbeitsmaschinen ausgebildet, auf denen ein jeweiliges den Ackerboden erfassendes Trenngerät vorgesehen ist. Dabei wird der Festkörper enthaltende Ackerboden von einem Rodeschar aufgenommen, als weitgehend geradliniger Förderstrom einer Separierstrecke übergeben und hier mittels jeweiliger Trennwalzen o. dgl. Sortierbaugruppen so bearbeitet, daß unterhalb dieses Trenngerätes ein klutenfreier garer Boden in Form eines Dammes erzeugt wird und aussortierte Festkörper neben dem Dammboden ablegbar sind. Im Bereich des Trenngerätes sind zur Anpassung an die zu bearbeitende Bodenstruktur jeweilige zwischen den Trennwalzen vorgesehene Siebspalte zwar veränderbar, aber Maschinen mit diesen Trenngeräten sind bei schweren nassen Böden nur bedingt einsetzbar und weisen bei geringer Fahrgeschwindigkeit sowie vermindertem Durchsatz eine geringe Produktivität auf.

Bei einer Maschine zum Trennen von Steinen aus Ackerböden gemäß DE 26 57 700 ist oberhalb vor einem den Boden aufnehmenden Schar ein rotierendes Hilfswerkzeug angeordnet, das mit einem Durchmesser von ca. 100 cm mit niedriger Umfangsgeschwindigkeit von oben auf die Bodenstruktur einwirkt und im Bereich dieses großbauenden Rotors erfordert diese Konstruktion eine aufwendige zusätzliche Schutzhaube. Gemäß GB 1 603 622 ist eine Maschine zum Separieren von Ackerboden gezeigt, wobei oberhalb des bodenseitigen Pflugschars ein als Klumpenbrecher vorgesehener Rotor auf die zur Bearbeitung vorgesehene Bodenstruktur drückt und auch bei der Vorrichtung gemäß GB 1 589 710 ist eine eine Preßwirkung auf dem Ackerboden erzeugende Rotor-Konstruktion vorgesehen, die mit von oben in die Ackerstruktur eingreifenden Plattenteilen vor dem Pflugschar als Einschubhilfe angeordnet ist. Bei sämtlichen bekannten Maschinen wird der zwischen den zusätzlichen oberen Rotoren und den jeweiligen Pflugscharen aufgenommene Förderstrom des Bodens direkt auf die Siebförderer aufweisende Trennstrecke verlagert.

Die Erfindung befaßt sich mit dem Problem, eine Maschine zur Behandlung des Ackerbodens zu schaffen, die mit geringem technischem Aufwand für schwere Böden einsetzbar ist, mit höherer Produktivität einen garen Dammboden erzeugende Baugruppen aufweist und eine verbesserte Trennung von Festkörpern auch aus mehrschichtigen Ackerböden ermöglicht.

Die Erfindung löst diese Aufgabe mit den Merkmalen des Anspruchs 1. Hinsichtlich wesentlicher weiterer Ausgestaltungen wird auf die Ansprüche 2 bis 25 verwiesen.

Die Maschine ist in erfindungsgemäßer Ausführung im Bereich des Trenngerätes als eine Funktionsbaugruppe ausgebildet, mit der aufzunehmender Ackerboden bereits im Bereich vor der Separierstrecke des Trenngerätes eine Auflockerungsphase durchläuft und danach in der Separierstrecke eine effizientere Trennung von Feinteilen und auszusortierenden Festkörpern möglich ist. Diese einer an sich bekannten Separierung vorgelagerte Auflockerung ist dabei so auf das Maschinenkonzept ausgerichtet, daß mit geringem konstruktivem Mehraufwand ohne eine wesentliche Verlängerung der Separierstrecke und mit weitgehend gleich bleibender Leistungsaufnahme der Maschine deren Anwendung für unterschiedlichste Bodenstrukturen optimiert wird und damit bodenspezifisch variable Anwendungen möglich sind.

Durch die gezielte Auflockerung auch jeweiliger als feuchter bzw. schwerer Boden bezeichneter Strukturen in deren Aufnahmephase kann die nachfolgende Separierung ohne bisher übliche zusätzliche Bearbeitungsschritte, z. B. Vorpflügen, Grubbern o. dgl. Aufbereitungen, erfolgen. Damit kann eine Verlängerung der Maschinen-Einsatzzeit erreicht werden und die Produktivität sowie die Auslastung der Maschine sind insgesamt durch geringere Rüst- und Reparaturzeiten erhöht.

Durch eine aggressivere Aufnahme von schwerem Ackerboden bei gleichzeitiger Auflockerung werden insbesondere durch eine Umlenkung entgegen der Fahrtrichtung gebrochene Bodenteile erzeugt, mit oben liegenden Bodenteilen gemischt und geradlinig in die Separierstrecke verlagert. Damit kann der Anteil jeweiliger bei bekannten Maschinen bisher als unerwünschte Festkörper aussortierter Erdklumpen in Form von Kluten o. dgl. vorteilhaft reduziert werden, da bereits zerschlagene Schollenteile in siebbarer Form im Gemisch auf die Separierstrecke gelangen und damit durch geringen konstruktiven Aufwand die Bearbeitungsqualität insgesamt verbessert wird.

Der zur Separierung vorgesehene Ackerboden kann auch als eine zweilagige Struktur aufgenommen werden, die beispielsweise aus im wesentlichen unbearbeitetem stehendem Boden und einer auf diesen durch zeitlich vorher erfolgtes Pflügen aufgelegten Bodenschicht in Beetform besteht. In der Maschine wird die der Separierstrecke vorgelagerte Auflockerung zu einer Vermischung der beiden Bodenstrukturen genutzt, wobei die tiefer liegenden, bei schwererem Boden zu Schollenbildung neigenden Bodenstrukturen erfaßt und vorzerkleinert wird. Diese Strukturen werden vor der eigentlichen Separierstrecke gebrochen und so aufgelockert, daß die Maschine insgesamt mit weitgehend unbeeinflußter Arbeitsgeschwindigkeit und Leistungsfähigkeit einsetzbar ist und die Flächenleistung erhöht wird.

Die Auflockerung erfolgt vorteilhaft mit einer ein drehbares Lockerungswerkzeug aufweisenden Aufnahmevorrichtung, wobei eine Aneinanderreihung jeweiliger auf einer Achse befindlicher Sternkörper eine Schneid-, Brech- bzw. Lockerungswalze bildet. Die jeweiligen Sternkörper sind radial mit mehreren an die Schneidbelastungen bzw. die Bodenstrukturen anpaßbaren Fingern versehen. Bei Verschleiß oder Beschädigung einzelner Teile sind die Sternkörper und/oder deren Finger einfach auswechselbar.

Im Bereich der Separierstrecke ist zusätzlich zur vorgeordneten Auflockerungseinheit noch eine verbesserte Spalteinstellung zwischen den einzelnen Trennwalzen vorgesehen. Durch deren individuelle Verstellung in bzw. entgegen der Arbeitsrichtung der Maschine erfolgt eine Anpassung an die für den garen Dammboden vorgesehene Feinteil-Struktur, wobei das vorgesehene Ergebnis des Siebvorganges durch variable Verstellwege der jeweiligen Trennwalzen und damit konstant einstellbare Spaltmaße beeinflußbar ist. Bei nassem schwerem Boden ist eine effiziente Separierung dadurch möglich, daß z. B. durch Spaltvergrößerung auch grobere Erdstrukturen noch für den Dammboden in das Beet austragbar sind und ein Abtransport bzw. eine Furchenablage grober Strukturen an sich fruchtbarer Nutzerde vermieden wird.

Diese variable Spalteinstellung wird mit einer Stellvorrichtung erreicht, mit der die abriebbelasteten Trennwalzen insbesondere verschleißabhängig einstellbar sind. Bei Anwendung der Maschine entsteht ein in Förder- bzw. Arbeitsrichtung jeweilige Bereiche mit unterschiedlichem Auflagegewicht bildender Gemischstrom. Dieser führt damit belastungsabhängig zu unterschiedlichem Verschleiß der Trennwalzen und damit deren Durchmesserverringerung. Deshalb wird eine Konstruktion vorgeschlagen, bei der erstmals zur Sicherung einer gleichmäßigen Qualität des Dammbodens die jeweiligen Siebspalte zwischen den Trennwalzen mittels der Stellvorrichtung einzeln nachstellbar sind und damit ein konstantes Abstandsmaß erreicht ist.

Zum beschleunigten Abtransport der im vorderen Teilbereich der Separierstrecke auf den Trennwalzen aussortierten Festkörper werden diese zusätzlich durch ein im Bereich eines hinteren Kettenförderers in Förderrichtung mitlaufendes Deckband erfaßt, damit in den quer zur Arbeitsrichtung wirksamen hinteren Ausförderer verlagert und mit diesem neben dem erzeugten Dammboden abgelegt oder einem Sammelgerät zugeführt.

Weitere Einzelheiten und vorteilhafte Ausgestaltungen der Erfindung ergeben sich aus den Zeichnungen, in denen ein Ausführungsbeispiel der erfindungsgemäßen Maschine dargestellt ist. In der Zeichnung zeigen:
- Fig. 1: eine perspektivische Darstellung der erfindungsgemäßen Separiermaschine zum Aufnehmen und Behandeln von Ackerboden,
- Fig. 2: eine Ausschnittsdarstellung eines Trenngerätes der Maschine in Seitenansicht,
- Fig. 3: eine vergrößerte Ausschnittsdarstellung einer zur Auflockerung ausgebildeten Aufnahmevorrichtung im Bereich vor der Separierstrecke des Trenngerätes,
- Fig. 4: eine Seitenansicht im Bereich eines Lockerungswerkzeuges der Aufnahmevorrichtung vor einer ersten Trennwalze der Separierstrecke,
- Fig. 5: eine Seitenansicht des Trenngerätes ähnlich Fig. 2 mit der Aufnahmevorrichtung in einer zweiten Ausführung, wobei das Lockerungswerkzeug eine nach Art eines Schars vorlaufende Schneidplatte aufweist,
- Fig. 6: eine perspektivische Ausschnittsdarstellung des Trenngerätes im Bereich der Aufnahmevorrichtung gemäß Fig. 5,
- Fig. 7: eine Prinzipdarstellung der Aufnahmevorrichtung mit Schneidplatte gemäß Fig. 5 in Seitenansicht,
- Fig. 8: eine vergrößerte Seitenansicht ähnlich Fig. 7 mit einer zusätzlichen Antriebsverbindung im Bereich der Schneidplatte,
- Fig. 9 bis Fig. 12: jeweilige vergrößerte Ausschnittsdarstellungen des nach Art einer Schneidwalze ausgebildeten Lockerungswerkzeuges in Einzeldarstellungen mit verschiedenen Ausführungen von Sternkörpern,
- Fig. 13 und Fig. 14: jeweilige linke bzw. rechte Seitenansichten des Trenngerätes mit den Antriebs- und Stellorganen im Bereich der angetriebener Trennwalzen,
- Fig. 15 und Fig. 16: eine jeweilige Seitenansicht des Trenngerätes mit unterschiedlichen Phasen bei einer Verstellung der Trennwalzen,
- Fig. 17: eine Seitenansicht ähnlich Fig. 15 mit einer ein zusätzliches Stellorgan aufweisenden Stellvorrichtung,
- Fig. 18 und Fig. 19: jeweilige Seitenansichten ähnlich Fig. 17, wobei die Stellvorrichtung zusätzlich zu den Stellorganen ein Steuerglied aufweist, und
- Fig. 20: eine Seitenansicht der Maschine gemäß Fig. 1.

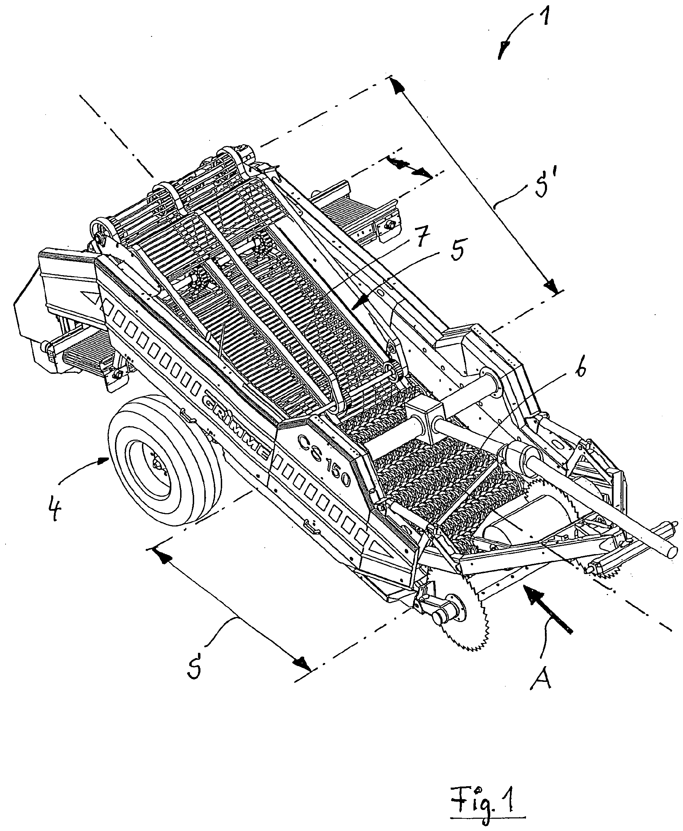

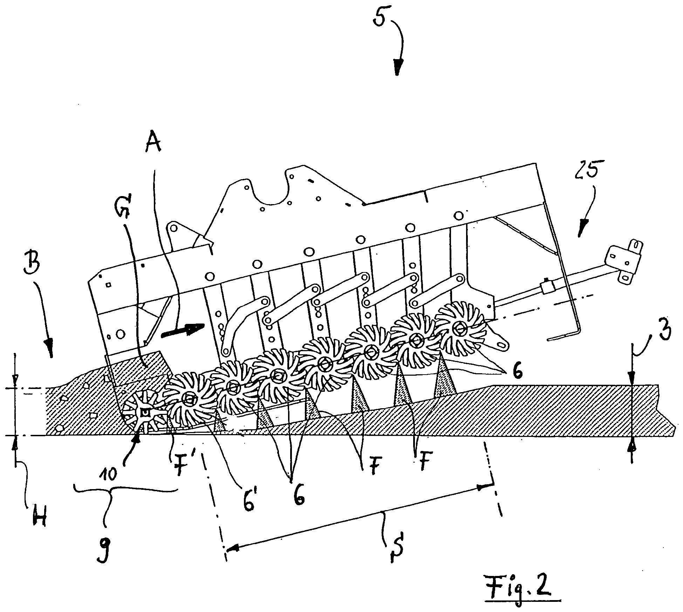

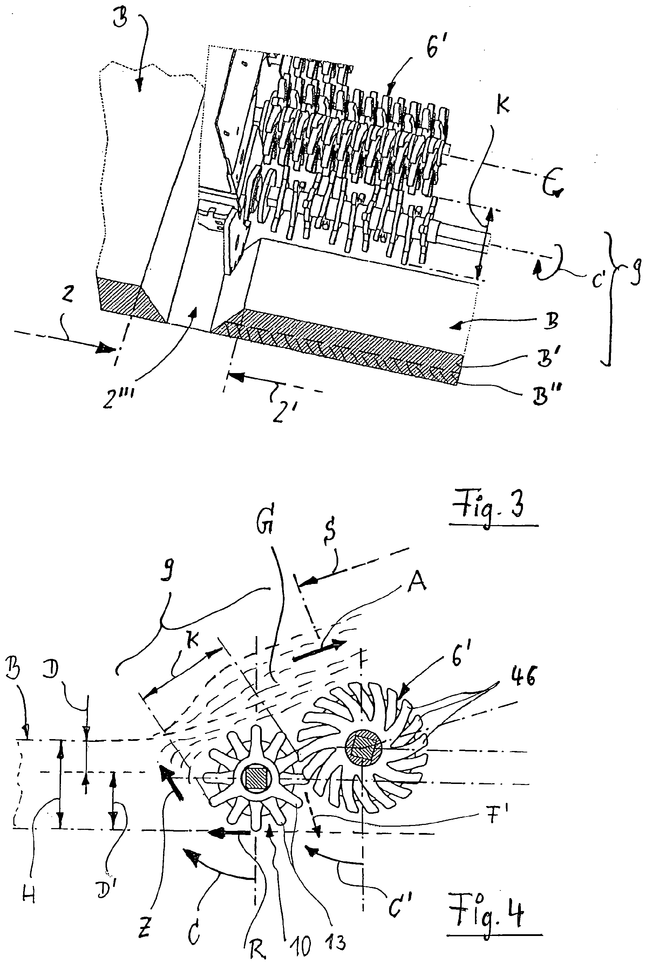

In Fig. 1 ist eine zum Aufnehmen und Behandeln von Ackerboden vorgesehene und allgemein als Separierer bezeichnete Maschine 1 dargestellt, die mittels eines nicht näher dargestellten Zugfahrzeuges antreibbar und verfahrbar ist. Derartige Maschinen 1 werden insbesondere zum Beetseparieren vor einem Anbau von Kartoffeln, Spargel o. dgl. Erdfrüchten eingesetzt. Dabei wird in einem ersten Bearbeitungsschritt der Ackerboden B zu einem Beet 2 (Fig. 3) geformt, danach dieses Beet 2' separiert und so für die nachfolgende Saatgutausbringung (nicht dargestellt) ein Dammboden 3 in garer Form (Fig. 2) bereitgestellt, wobei dieser insbesondere von Steinen, Kluten o. dgl. Festkörpern befreit ist und diese beispielsweise in einer Furche 2" abgelegt sind.

Die Maschinen 1 dieser Art (EP 0 654 208) sind mit einem ein Fahrgestell 4 aufweisenden Trenngerät 5 versehen, daß in Arbeitsrichtung (Pfeil A, Fig. 1) hintereinander mit jeweiligen Trennwalzen 6, Siebbändern 7 o. dgl. Sortierbaugruppen eine Separierstrecke S, S' bildet. Bei den bekannten Maschinen 1 wird der Ackerboden B mittels einer vor der ersten Trennwalze 6' befindlichen Schar geradlinig in die Separierstrecke S eingeschoben, direkt auf die Trennwalzen 6 aufgelegt, dabei gelockert und erst danach gesiebt.

Die erfindungsgemäße Maschine 1 weist eine konstruktive Änderung des Maschinenkonzepts auf, gemäß dem der Ackerboden B bereits im Bereich vor der Separierstrecke S des Trenngerätes 5 aufgelockert und damit die Produktivität des Separier-Vorgangs erhöht wird. Bei dem als Beet-Technologie vorgesehenen Anbauverfahren mit den Bearbeitungsphasen Beetformen, Separieren und Legen des Saatgutes wird ein beschleunigter Ablauf mit höherer Flächenleistung erreicht, da die bisher die Produktivität begrenzende Separierphase mit höherer Durchsatzleistung verkürzt werden kann und auch nasse Böden bearbeitbar sind.

Mit der Maschine 1 ist eine aus vorbereiteter Ackerbodenschicht B' sowie einer darunter liegenden Bodenschicht B" gebildete Bodenstruktur aufnehmbar und gleichzeitig auflockerbar, so daß damit ein insgesamt aufgelockertes Gemisch G (Fig. 2) über eine erste Sortierbaugruppe bei 6' in die Separierstrecke S einleitbar ist. Bereits in diesem Auflockerungsbereich sind jeweilige Feinteile F' der Bodenstruktur als unter der Maschine 1 ablegbarer Dammboden 3 separierbar und ein die Festkörper, gebrochene Schollenteile o. dgl. Strukturen enthaltender Rest des Gemisches G wird auf der Separierstrecke weitergeleitet und gesiebt. In einfachster Ausführung ist denkbar, daß für diese Auflockerungsphase der vordere Bereich der Maschine 1 durch eine nicht näher dargestellte Bewegungs- und Beschleunigungseinheit verlagert wird, so daß der Ackerboden B bereits im Bereich der an sich bekannten Aufnahme-Schar (EP 0 654 208) aufgelockert und weitergeleitet werden kann.

Die Seitenansicht gemäß Fig. 2 zeigt eine erfindungsgemäße Konstruktion des Trenngerätes 5, das vor der ersten Trennwalze 6' (Drehrichtung: C') mit einer den Ackerboden B erfassenden und dabei auflockernden Aufnahmevorrichtung 9 versehen ist. Diese Aufnahmevorrichtung 9 kann in weitgehend beliebiger konstruktiver Gestaltung ausgeführt sein, wobei deren bodenspezifische Einstellung auf jeweilige unterschiedliche Funktionslagen denkbar ist oder die Aufnahmevorrichtung 9 auch mittels eines nicht näher dargestellten Antriebes entsprechend den Bodenverhältnissen in diesen Funktionslagen positioniert wird.

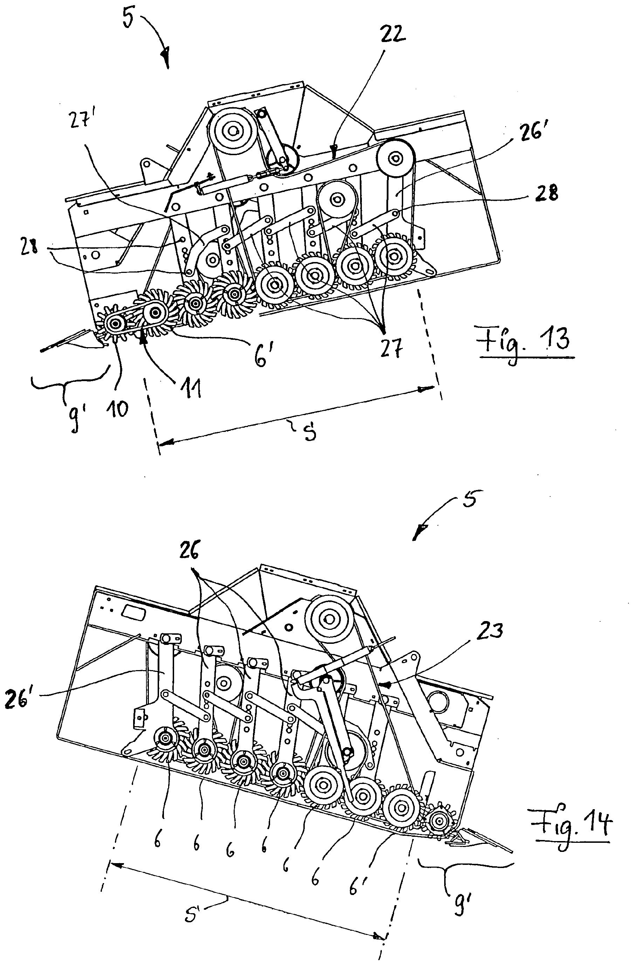

In der ersten Ausführung der Aufnahmevorrichtung 9 gemäß Fig. 2 bis 4 ist diese mit einem speziellen und zur Aufnahme und Auflockerung des Ackerbodens B insbesondere direkt antreibbaren Lockerungswerkzeug 10 versehen. Dieses Werkzeug 10 ist als eine den Ackerboden B bzw. die mehrlagige Bodenstruktur B', B" unmittelbar erfassende und für den Separiervorgang (Arbeitsrichtung gemäß Pfeil A) auflockernde Baugruppe (hier: Drehrichtung gemäß Pfeil C) ausgebildet ist (Fig. 4). Denkbar ist dabei auch, daß die Aufnahmevorrichtung 9 im Bereich des Lockerungswerkzeuges 10 mit einem zusätzlich oder an Stelle der Drehbewegung (Pfeil C) eine axiale oder radiale Schwingung vermittelnden Antrieb versehen ist (nicht dargestellt). In zweckmäßiger Ausführung wird die mit dem Pfeil C dargestellte Drehbewegung mittels eines mit den Baugruppen der Separierstrecke S verbundenen Keilriemenantriebes 11 (Fig. 13) auf das Lockerungswerkzeug 10 übertragen.

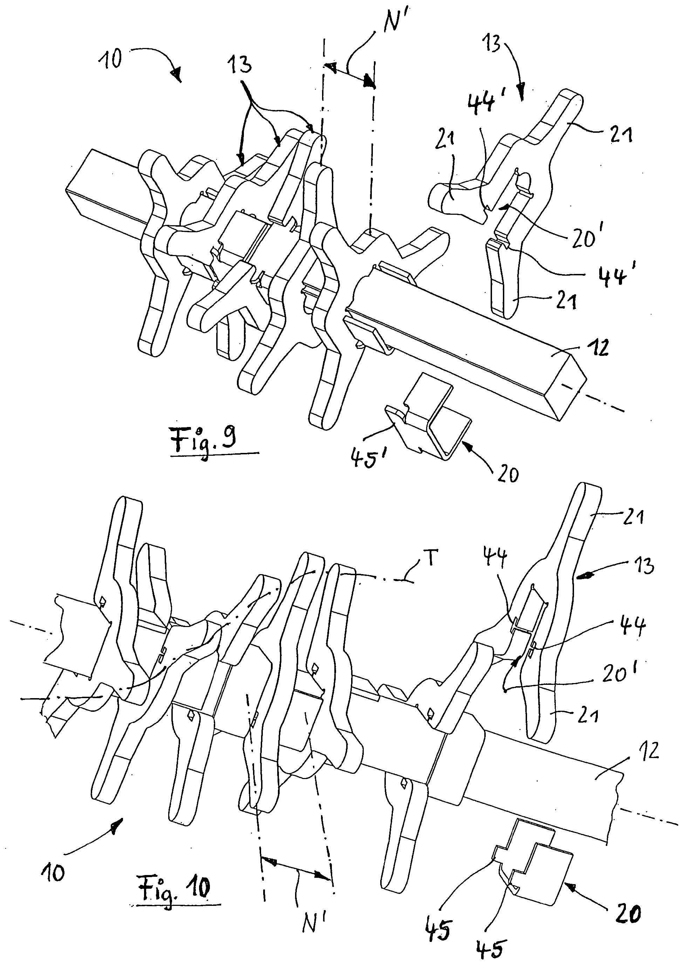

Das Lockerungswerkzeug 10 ist vorteilhaft nach Art einer mehrere Schneidteile in Form von Sternkörpern 13 (Fig. 9 bis 12) aufweisenden Walze ausgebildet. Diese Schneidwalze kann entsprechend den erzielbaren Wirkungen auf den Ackerboden B auch als Zerkleinerungswalze, Rüttelwalze, Brechwalze oder Schollenbrecher bezeichnet werden. Das in der der Arbeitsrichtung A des Trenngerätes 5 entsprechenden Drehrichtung C antreibbare Werkzeug 10 ist auch so ausführbar, daß dessen Drehrichtung zumindest in einer Reinigungsphase der Aufnahmevorrichtung 9 umschaltbar ist.

Mit der Antriebsverbindung 11 zur ersten Trennwalze 6 der Separierstrecke S ist eine erste Ausführung des vom Trenngerät 5 abhängigen Antriebes dargestellt. Denkbar ist auch, eine von der Separierstrecke S bzw. deren Baugruppen unabhängige Ausführung des Antriebes des Lockerungswerkzeuges 10 vorzusehen. Damit könnten beispielsweise mittels eines separaten Hydromotors und/oder eines Getriebeteils weitgehend variable Drehzahlen und Drehrichtungen einstellbar und mit geringem Aufwand die Bearbeitungsparameter in dieser Auflockerungsphase an die Bodenzustände anpaßbar sein.

Die in Fig. 2 bis 4 gezeigten Eingriffsverhältnisse des Lockerungswerkzeuges 10 zeigen, daß von diesem der eine Höhe H aufweisende Ackerboden B ausgehend von der oberen Bodenstruktur B' bis in den Bereich der unteren Bodenschicht B" aufnehmbar ist. Mit dieser unteren Bodenschicht B" (Dicke D') kann die Gesamthöhe H des zur Separierung anstehenden Ackerbodens B bei Verwendung des Lockerungswerkzeugs 10 nunmehr bis auf ein Maß von beispielsweise H = 50 bis 60 cm erhöht werden, so daß die bei bisher üblichen Maschinen mit einfacher Schar-Aufnahme vorgesehene Dicke von D = 25 bis 30 cm der vorbereiteten oberen Bodenschicht B' wesentlich überschritten wird. Es hat sich gezeigt, daß die unten liegende Bodenschicht B" dabei auch aus einem nassen Boden bestehen kann, dessen Bodenpunkt - Kennwert ≥ 30 ist.

Die Darstellung gemäß Fig. 2 zeigt auch, daß die Höhe H insgesamt ein größeres Maß aufweisen kann als ein jeweiliger Durchmesser K des Lockerungswerkzeuges 10. Der Ackerboden B wird vom Lockerungswerkzeug 10 in einer Pfeilrichtung Z (Fig. 4) entgegen der Fahrtrichtung der Maschine 1 erfaßt, so daß eine der Schollenbildung entgegenwirkende Brechkraft in den Ackerboden B eingeleitet und damit ein zerkleinerte Teile enthaltendes Gemisch G in die Separierstrecke S gefördert wird (Pfeil A). Es hat sich gezeigt, daß die insbesondere hohe Feuchte aufweisende untere Bodenschicht B" (Fig. 3) eine Mächtigkeit von 5 % bis 40 % des Durchmessers K des Lockerungswerkzeugs 10 aufweisen kann.

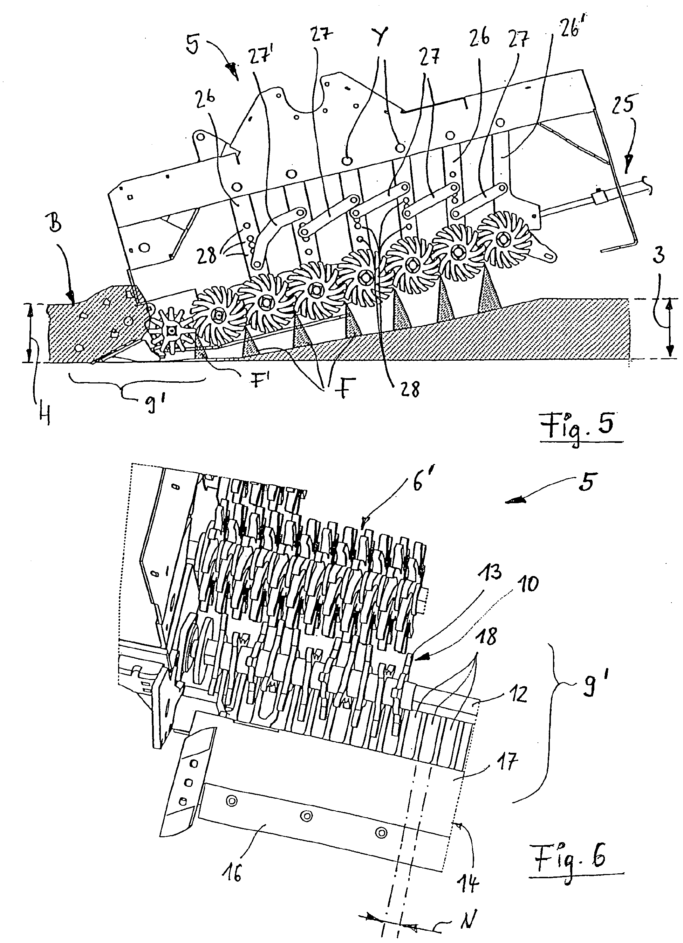

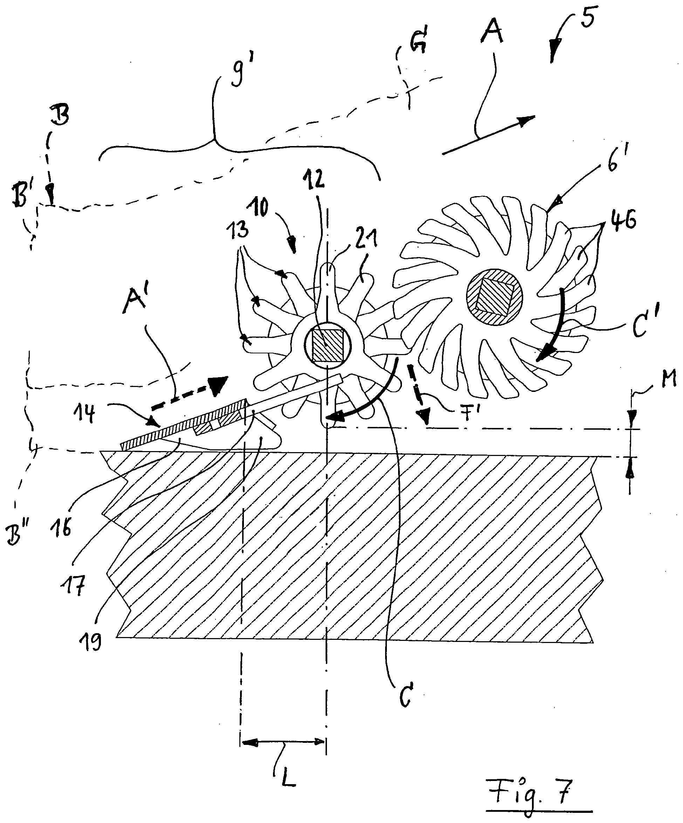

In Fig. 5 bis 8 ist eine zweite Ausführung der das Lockerungswerkzeug 10 aufweisenden Aufnahmevorrichtung 9' dargestellt, wobei diese zusätzlich mit einer den Ackerboden B bzw. die Bodenschichtung B', B" untergreifenden Schneidplatte 14 versehen ist. Diese nach Art eines an sich bekannten Schares wirksame Schneidplatte 14 wirkt mit dem in Arbeitsrichtung A nachgeordneten Lockerungswerkzeug 10 so zusammen, daß die in Fig. 7 näher dargestellten Eingriffsbedingungen zu einem optimalen Auflockerungsvorgang führen. Dabei wird mittels der Schneidplatte 14 eine Verringerung der Belastung (Pfeil R, Fig. 4) der Sternkörper 13 erreicht, an diesen sind Lastspitzen im festen Boden B" vermieden und der Verschleiß des Werkzeugs 10 wird verringert. Fig. 7 zeigt einen Bodenabstand M für das Lockerungswerkzeug 10, wobei die vorlaufende Schneidplatte 14 den insbesondere Schollen bildenden Boden B" abschert und diesen in einer Schubrichtung A' der Auflockerung zuführt.

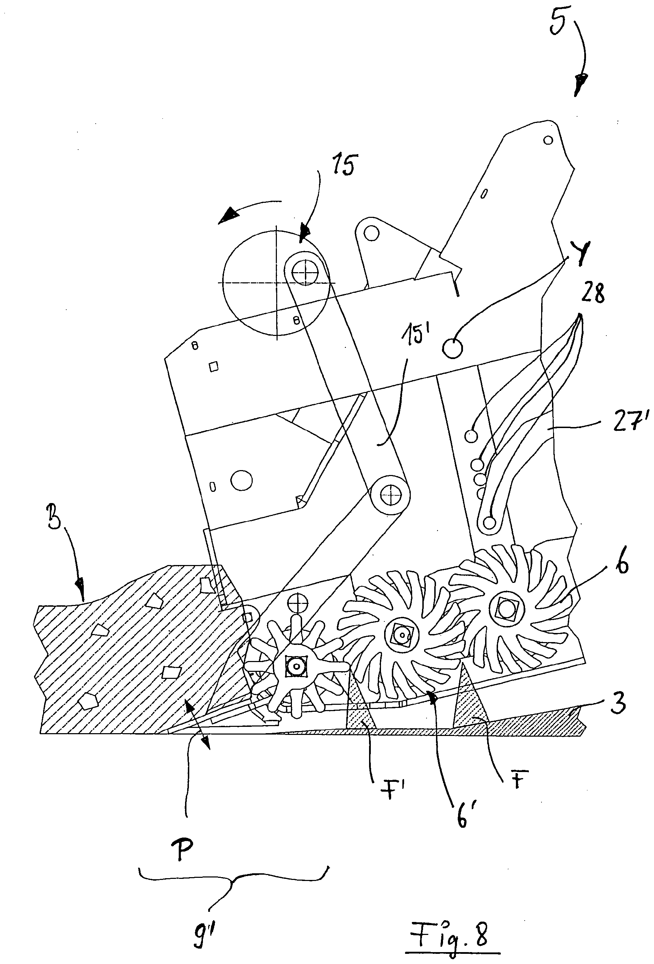

Fig. 8 zeigt dabei, daß die Schneidplatte 14 mit einem separaten Antrieb 15 versehen sein kann, so daß mit einer Kurbelverbindung 15' eine Schwingbewegung gemäß Pfeil P an der Schneidplatte 14 ausführbar ist. Ebenso ist denkbar, daß die Schneidplatte 14 in ihrer Position zum Lockerungswerkzeug 10 variabel verstellt werden kann (nicht dargestellt). Insbesondere kann dabei der Abstand L zwischen Schneidplatte 14 und Lockerungswerkzeug 10 verändert werden (Fig. 7).

Die Draufsicht gemäß Fig. 6 verdeutlicht, daß die Schneidplatte 14 mit einem vorderen und einem hinteren Plattenteil 16, 17 mehrteilig ausgebildet ist und der hintere Plattenteil 17 eine von den jeweiligen Sternkörpern 13 des Lockerungswerkzeuges 10 durchgriffene kammartige Struktur 18 aufweist. Diese Struktur 18 bildet damit Spalte mit einer Breite N, die entsprechend der vorgesehenen Schutz- und Siebwirkung variabel bemessen sein können. Der vordere Plattenteil 16 ist als Verschleißteil vorgesehen und kann einfach ausgewechselt werden. An der oberen Platte 17 ist rückseitig eine Stützkufe 19 zur Stabilisierung vorgesehen (Fig. 7).

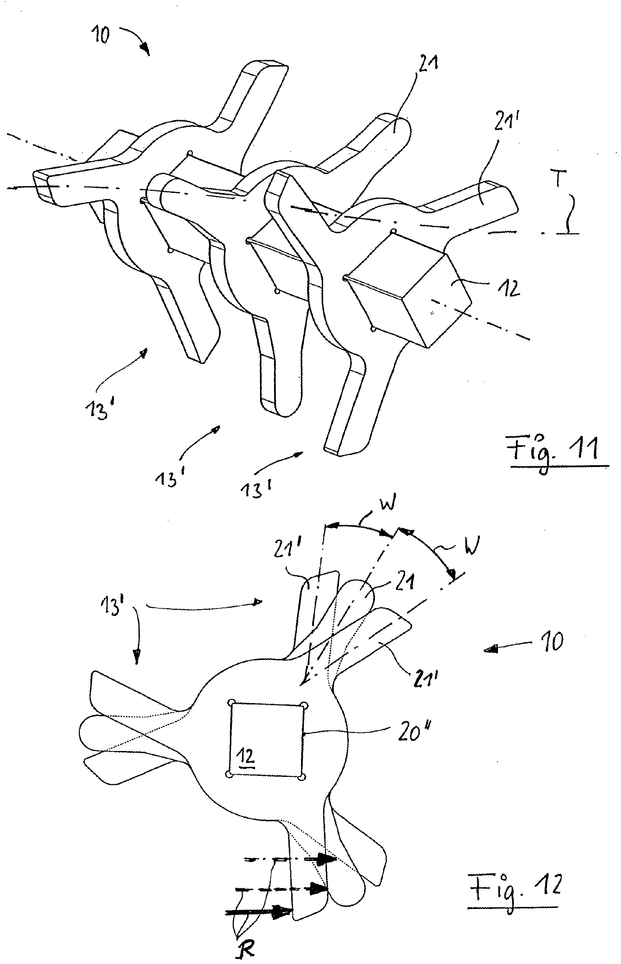

Die Zusammenschau der vergrößerten Ausschnittsdarstellungen gemäß Fig. 9 bis 12 zeigt, daß das als Schneidwalze ausgebildete Lockerungswerkzeug 10 mit einer Vielzahl auf einer Achse 12 auswechselbar aneinandergereihter Sternkörper 13, 13' versehen ist. Diese sind mittels jeweiliger Abstandhalter 20 und einer Aufnahmeöffnung 20' bzw. 20" auf der Achse 12 festlegbar, wobei jeweilige Finger 21, 21' versetzt zueinander radial vorstehen und in axialer Richtung eine nach Art einer Schraubenlinie verlaufende Wirklinie T bilden. Die Stirnansicht gemäß Fig. 12 zeigt, daß die Finger 21, 21' jeweils um einen Winkel W radial versetzt sind. Dieser Versatz-Winkel W kann durch die jeweilige Steckverbindung mittels der Öffnungen 20', 20" und die entsprechende Konstruktion der Finge 21, 21' vorgegeben bzw. auf spezifische Schneidbedingungen eingestellt werden, wobei der Winkel W vorzugsweise 30° beträgt. Mit dieser Anordnung der Finger 21, 21' kann in einer mit Pfeilen R (Fig. 12) veranschaulichten Belastungsphase (ähnlich: Fig. 4) eine schlagartige Schnittkrafteinleitung auf die Sternkörper 13, 13' vermieden werden, so daß durch geringeren Kantenausbruch o. dgl. Beschädigungen der Finger 21, 21' die Standzeit des Lockerungswerkzeugs 10 insgesamt erhöht ist.

Die Sternkörper 13 gemäß Fig. 9 sind mit der U-förmigen Aufnahmeöffnung 20' so ausgebildet, daß an deren Seitenflächen jeweilige Steckschlitze 44 jeweilige axiale Steckansätze 45 der Abstandhalter 20 aufnehmen können. Mit dieser Verbindung wird eine kraft- und formschlüssige Fixierung der Sternkörper 13 erreicht, da der Kraftfluß auch im Bereich der Aufnahmeöffnung 20' geschlossen und der als Distanzstück vorgesehene Abstandhalter 20 brückenartig wirksam wird. Der in Fig. 9 gezeigte Abstandhalter 20 weist einen einteiligen Steckansatz 45' auf, der mit jeweiligen Steckschlitzen 44' zusammenwirkt. Die Abstandhalter 20 können in ihrer axialen Länge variabel ausgeführt werden, so daß damit der Abstand N' der Sternkörper 13 an unterschiedliche Bearbeitungsbedingungen anpaßbar ist. Die Verbindungsglieder 44, 44' und 45, 45' sind dabei so bemessen, daß die Sternkörper 13 einzeln austauschbar sind, da die aus verschleißfestem Material bestehenden Sternkörper 13 hohen Belastungen ausgesetzt sind.

In Fig. 13 und 14 zeigen jeweilige um 180° versetzte Seitenansichten des Trenngerätes 5 die Antriebsverbindungen im Bereich der Separierstrecke S. In zweckmäßiger Ausführung sind dabei jeweils mehrere der Trennwalzen 6 (in Fig. 13 die vier hinteren) mit einem Ketten- oder Riemenantrieb 22 versehen. Die vorderen drei Trennwalzen 6 gemäß Fig. 14 weisen einen zweiten Antrieb 23 auf, wobei die vordere der Trennwalzen 6' auf zumindest einer Antriebsseite zusätzlich mittels des Antriebes 11 an die Aufnahmevorrichtung 9' bzw. das Lockerungswerkzeug 10 gekoppelt ist (Fig. 13).

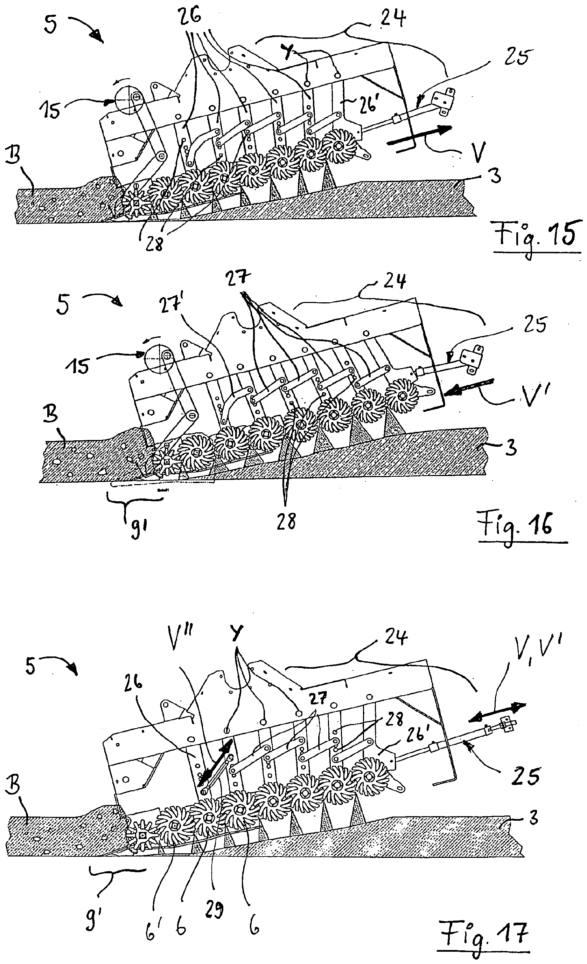

In Fig. 15 und 16 ist (bei nicht eingezeichneten Antrieben 22 bzw. 23) eine einstellbare Halterung der Trennwalzen 6, 6' durch jeweilige Bewegungsphasen einer Stellbaugruppe 24 verdeutlicht. Diese ist in zweckmäßiger Ausführung mit einem Hydraulikantrieb 25 versehen. Die am Gestell des Trenngerätes 5 gehaltene Stellbaugruppe 24 weist ihrerseits zur Aufnahme der sechs verstellbaren Trennwalzen 6 jeweilige Schwenkbalken 26, 26' auf, die untereinander durch einen jeweiligen Führungsstab 27, 27' so verbunden sind, daß eine mit einem Pfeil V, V' eingeleitete, im wesentlichen lineare Stellbewegung im Bereich des Hydraulikantriebes 25 eine gleichzeitige Bewegung sämtlicher Schwenkbalken 26, 26' bewirkt, wobei diese jeweils um den Haltepunkt Y schwenken.

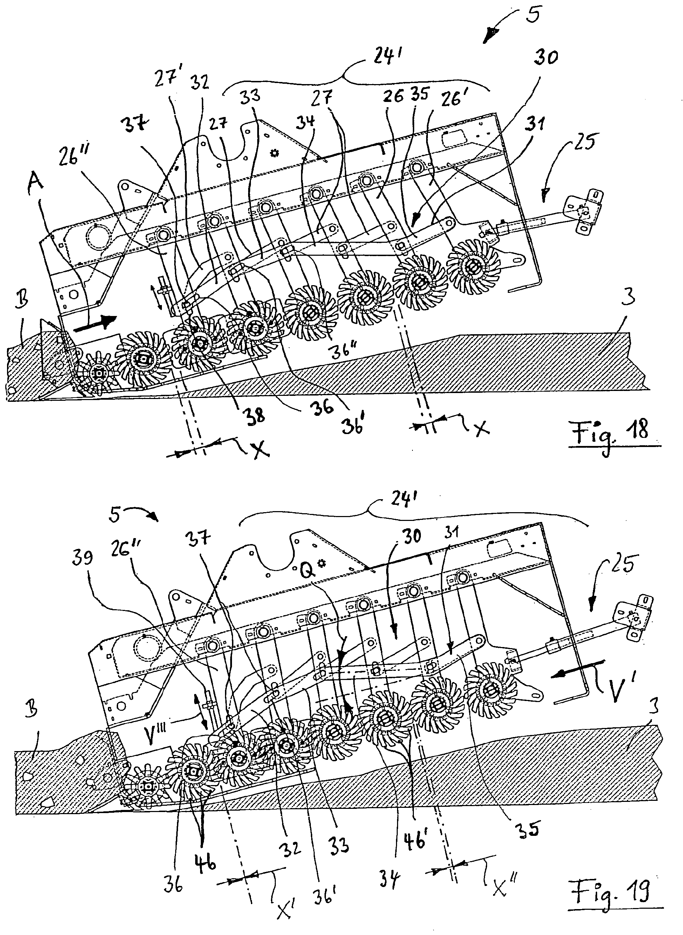

Die Führungsstäbe 27, 27' können dabei im Bereich jeweiliger Halteöffnungen 28 in unterschiedlichen Positionen fixiert werden, so daß in Längsrichtung der Trennstrecke S unterschiedliche Spaltabstände X (Fig. 18) als ein durch die jeweiligen Verbindungen mittels der Öffnungen 28 vorgegebenes Festmaß einstellbar sind. Bei der Ausführung gemäß Fig. 17 ist an Stelle des vorderen Führungsstabes 27' eine hydraulische Stelleinheit 29 vorgesehen, so daß im Bereich der hoch belasteten vorderen drei Trennwalzen 6', 6 eine weitgehend individuelle Spalteinstellung möglich ist, die zusätzlich in einer Pfeilrichtung V" zu der Verstellung gemäß V, V' ausgeführt werden kann.

In Fig. 18 und 19 ist eine konstruktive Erweiterung der vorbeschriebenen Stellbaugruppe 24' dargestellt, wobei diese im Bereich der Schwenkbalken 26, 26', 26" bzw. der Führungsstäbe 27, 27' eine Steuerbaugruppe 30 mit einer sich in Längsrichtung über sämtliche der Trennwalzen 6 erstreckenden Lenkstange 31 aufweist. Diese Lenkstange 31 bildet in einstückiger Ausführung unterschiedliche Schenkelbereiche 32, 33, 34, 35 zwischen den Schwenkbalken 26, 26', 26". Zu diesen hin ist im jeweiligen Verbindungsbereich eine Bolzen-Nut-Verbindung mit jeweiligen Nuten 36, 26', 36" an der Lenkstange 31, jeweiligen Nuten 38 an den jeweiligen Schwenkbalken 26, 26" und einem jeweiligen diese Nuten durchgreifenden Bolzen 37 (Fig. 18, linke Seite) vorgesehen. Damit ist eine unterschiedliche Verstellung des jeweiligen Spaltmaßes X möglich und jede Trennwalze 6 einzeln einstellbar, wobei eine im wesentlichen lineare Verlagerung (Pfeil V', Fig. 19) erfolgt.

In Fig. 18 ist eine denkbare Position der Trennwalzen 6, 6' bei Bearbeitungsbeginn dargestellt, wobei die Spaltmaße X im wesentlichen konstant sind. Während einer nachfolgenden Separier-Bearbeitung treten an den Trennwalzen 6, 6' jeweilige deren Durchmesser K reduzierende Verschleißerscheinungen auf, so daß die bereits in Fig. 15 bis 17 gezeigte Nachstellung erforderlich wird, um die vorgesehene Qualität des Dammbodens 3 zu erreichen. Mit der Steuerbaugruppe 30 gemäß Fig. 18 sind nunmehr die Trennwalzen 6 um einzeln vorgebbare Stellwege verlagerbar, um die sich durch den Verschleiß der jeweiligen Finger 46, 46' (Fig. 19) unterschiedlich ändernden Siebspalte einzustellen. In Fig. 19 sind mit den Spaltmaßen X' bzw. X" jeweilige Ergebnisse dieser Einstellungen verdeutlicht.

Die Trennwalzen 6 sind durch die eine gleichzeitige Verlagerung um unterschiedliche Stellwege bewirkende Baugruppe 30 so verbunden, daß mittels der Lenkstange 31 und den Bolzen-Nut-Führungen entsprechende Haltepositionen vorgegeben sind. Damit kann der in Richtung der Separierstrecke S entsprechend der Förderrichtung A abnehmende Verschleiß der Trennwalzen 6 bzw. deren Finger 46, 46' entsprechend den unterschiedliche Längen aufweisenden Nuten 36, 36', 36" so kompensiert werden, daß durch eine konstruktiv vorgebbare Einzelverstellung eine optimale Separierung erreicht wird.

Bei dieser Verstellung mittels des Hydraulikantriebes 25 (Pfeil V', Fig. 19) wirkt der Schwenkbalken 26" mit einem Antrieb 39 (Pfeil V"', Fig. 19) zusammen. Dabei drücken die jeweiligen in den Nuten 36, 36', 36" bzw. 38 verschiebbar anliegenden Bolzen 37 der Steuerbaugruppe 30 die jeweiligen Schwenkbalken 26, 26', 26" nach vorn, wobei unterschiedliche Stellwege durch die Länge der jeweiligen Nuten 36, 36', 36" begrenzt sind. Mit diesem System können insbesondere einzeln vorausberechenbare Verschleiß-Nachstellwege (je Trennwalze 6) mittels der entsprechend geneigten Schenkelbereiche 32, 33, 34, 35 (Winkel Q, Fig. 19) der Lenkstange 31 und der Längen der Nuten 36, 38 vorgegeben werden, wobei das System entsprechend der Bodenqualität und/oder der Verschleißfestigkeit der Trennwalzen 6 mit individuell anpaßbaren Stellbaugruppen 24' versehen wird, in denen einzelne Nachstellwege "gespeichert" sind.

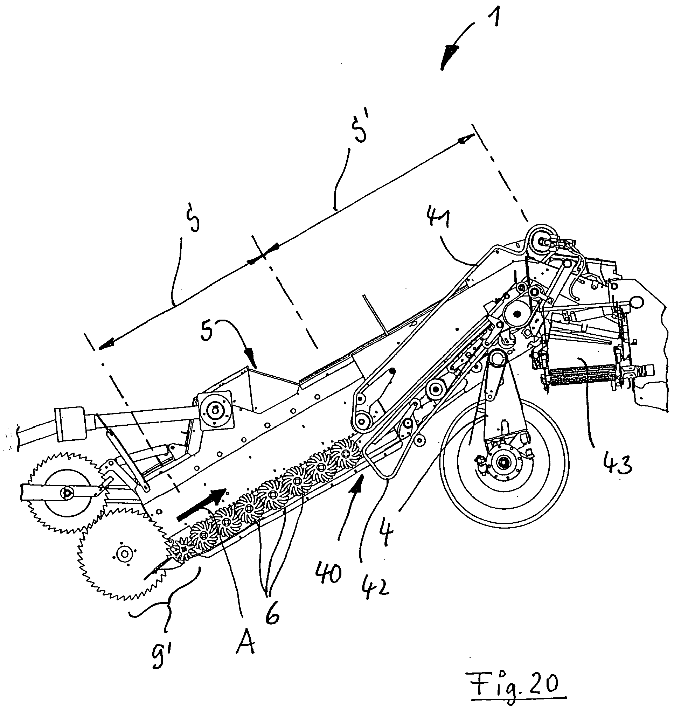

In Fig. 20 zeigt eine Seitenansicht den prinzipiellen Aufbau der Maschine 1 mit den beiden Separierstrecken S und S', wobei der hintere Bereich des Kettenförderers 40 jeweilige in Förderrichtung mitlaufende Deckbänder 41, 42 aufweist, mit denen die erfaßten Festkörper in den hinteren Ausförderer 43 verlagerbar und mit diesem in der Furche 2"' (Fig. 3) ablegbar sind.

## Patentansprüche

1. Maschine zum Aufnehmen und Behandeln eines insbesondere Steine, Kluten o. dgl. Festkörper enthaltenden Ackerbodens (B), mit einem ein Gestell (4) o. dgl. Halterung aufweisenden Trenngerät (5), das in Arbeitsrichtung (A) hintereinander mit jeweiligen Trennwalzen (6, 6'), Siebbändern (7) o. dgl. Sortierbaugruppen eine Separierstrecke (S, S') für den aufgenommenen Ackerboden (B) bildet, der zu einem weitgehend stein- sowie klutenfreien Dammboden (3) in garer Form verarbeitet wird und dabei die Festkörper aussortiert werden, **dadurch gekennzeichnet, daß** der Ackerboden (B; B', B") bereits im Bereich vor der Separierstrecke (S) des Trenngerätes (5) auflockerbar ist, wobei das Trenngerät (5) eine den Ackerboden (B) aufnehmende sowie auflockernde Aufnahmevorrichtung (9, 9') aufweist und diese mit zumindest einem zur Aufnahme und/oder Auflockerung antreibbaren Lockerungswerkzeug (10) versehen ist.

2. Maschine nach Anspruch 1, **dadurch gekennzeichnet, daß** von dieser (1) eine aus vorbereiteter Ackerbodenschicht (B') sowie einer darunter liegenden Bodenschicht (B") gebildete Bodenstruktur aufnehmbar, dabei diese Bodenstruktur auflockerbar und damit ein aufgelockertes Gemisch (G) über eine erste Sortierbaugruppe (6') in die Separierstrecke (S) einleitbar ist.

3. Maschine nach Anspruch 1 oder 2, **dadurch gekennzeichnet, daß** bereits im Auflockerungsbereich jeweilige Feinteile (F, F') der Bodenstruktur als unter der Maschine (1) ablegbarer Dammboden (3) separierbar sind und das Festkörper, Schollenteile o. dgl. enthaltende Gemisch (G) zur Separierstrecke (S, S') weiterleitbar ist.

4. Maschine nach einem der Ansprüche 1 bis 3, **dadurch gekennzeichnet, daß** die Aufnahmevorrichtung (9, 9') auf jeweilige die Auflockerung des Ackerbodens (B) vor der Separierstrecke (S, S') bewirkende Funktionslagen einstellbar ist.

5. Maschine nach einem der Ansprüche 1 bis 4, **dadurch gekennzeichnet, daß** die Aufnahmevorrichtung (9, 9') mittels eines Antriebes verlagerbar ist.

6. Maschine nach einem der Ansprüche 1 bis 5, **dadurch gekennzeichnet, daß** der Ackerboden (B) bzw. die mehrlagige Bodenstruktur (B, B') unmittelbar mit dem Lockerungswerkzeug (10) erfaßbar ist.

7. Maschine nach Anspruch 6, **dadurch gekennzeichnet, daß** das Lockerungswerkzeug (10) mit zumindest einem diesem eine Schwing- und/oder Drehbewegung (C) vermittelnden Antrieb (11) zusammenwirkt.

8. Maschine nach einem der Ansprüche 1 bis 7, **dadurch gekennzeichnet, daß** das Lockerungswerkzeug (10) nach Art einer Schneidwalze ausgebildet und diese in einer der Arbeitsrichtung (A) des Trenngerätes (5) entsprechenden Drehrichtung (C) antreibbar ist.

9. Maschine nach Anspruch 8, **dadurch gekennzeichnet, daß** die Drehrichtung (C) des Lockerungswerkzeuges (10) zumindest in einer Reinigungsphase umschaltbar ist.

10. Maschine nach einem der Ansprüche 1 bis 9, **dadurch gekennzeichnet, daß** das Lockerungswerkzeug (10) unabhängig von den Baugruppen der nachgeordneten Separierstrecke (S) antreibbar ist.

11. Maschine nach einem der Ansprüche 1 bis 10, **dadurch gekennzeichnet, daß** das Lockerungswerkzeug (10) zu einer nachgeordneten Baugruppe (6') der Separierstrecke (S) hin eine Antriebsverbindung (11) aufweist.

12. Maschine nach einem der Ansprüche 1 bis 11, **dadurch gekennzeichnet, daß** das Lockerungswerkzeug (10) mit einer Vielzahl auf einer Achse (12) auswechselbar aneinandergereihter Sternkörper (13) versehen ist.

13. Maschine nach Anspruch 12, **dadurch gekennzeichnet, daß** die aneinandergereihten Sternkörper (13') durch zwischengeordnete Abstandhalter (20) axial und radial fixierbar sind.

14. Maschine nach Anspruch 12 oder 13, **dadurch gekennzeichnet, daß** die eine U-förmig offene Aufnahmeöffnung (20') aufweisenden Sternkörper (13) mittels der Abstandhalter (20) durch eine Steckverbindung (44, 44', 45, 45') fixierbar sind.

15. Maschine nach einem der Ansprüche 1 bis 14, **dadurch gekennzeichnet, daß** die Aufnahmevorrichtung (9) eine den Ackerboden (B) bzw. die Bodenschichtung (B', B") nach Art einer Schar untergreifende Schneidplatte (14) aufweist und diese mit dem nachgeordneten Lockerungswerkzeug (10) zusammenwirkt.

16. Maschine nach Anspruch 15, **dadurch gekennzeichnet, daß** die Schneidplatte (14) antreibbar (Antrieb 15) und/oder verstellbar (Pfeil P) ist.

17. Maschine nach Anspruch 15 oder 16, **dadurch gekennzeichnet, daß** der Abstand zwischen Schneidplatte (14) und Lockerungswerkzeug (10) veränderbar ist.

18. Maschine nach einem der Ansprüche 15 bis 17, **dadurch gekennzeichnet, daß** die Schneidplatte (14) mit einem vorderen und hinteren Plattenteil (16, 17) mehrteilig ausgebildet ist und der hintere Plattenteil (17) eine von jeweiligen Sternkörpern (13) des Lockerungswerkzeuges (10) durchgriffene kammartige Struktur (18) aufweist.

19. Maschine zum Aufnehmen und Behandeln von Ackerboden, mit insbesondere einstellbaren Trennwalzen (6) im Bereich der Separierstrecke (S) nach einem der Ansprüche 1 bis 18, **dadurch gekennzeichnet, daß** die Trennwalzen (6, 6') einzeln verlagerbar sind.

20. Maschine nach Anspruch 19, **dadurch gekennzeichnet, daß** die Separierstrecke (S) zwischen benachbarten Trennwalzen (6, 6') jeweilige sich durch Verschleiß unterschiedlich ändernde Siebspalte (X', X") aufweist und diese einzeln auf ein vorgesehenes Maß nachstellbar sind.

21. Maschine nach Anspruch 19 oder 20, **dadurch gekennzeichnet, daß** mehrere der Trennwalzen (6) durch eine deren gleichzeitige Verlagerung um jeweils einzeln vorgebbare Stellwege bewirkende Stellbaugruppe (24, 24') verbunden sind.

22. Maschine nach einem der Ansprüche 19 bis 21, **dadurch gekennzeichnet, daß** die Stellbaugruppe (24) die Trennwalzen (6) an jeweiligen endseitigen Schwenkbalken (26, 26') trägt und diese durch jeweilige Führungsstäbe (27, 27') kettenartig mit zumindest einem Stellorgan (25) verbunden sind.

23. Maschine nach einem der Ansprüche 19 bis 22, **dadurch gekennzeichnet, daß** die einstellbaren Trennwalzen (6) im Bereich der den Antrieb (25) aufweisenden Stellbaugruppe (24') mittels einer zusätzlichen Steuerbaugruppe (30) verbunden sind.

24. Maschine nach einem der Ansprüche 19 bis 23, **dadurch gekennzeichnet, daß** die in Arbeitsrichtung (Pfeil A) der Separierstrecke (S) durch abnehmenden Verschleiß veränderlichen Siebspalte mittels der als eine Lenkstange (31) ausgebildeten Steuerbaugruppe (30) vorgebbar sind.

25. Maschine nach Anspruch 24, **dadurch gekennzeichnet, daß** für jede der Trennwalzen (6) durch eine jeweilige Bolzen-Nut-Verbindung (36, 37, 38) im Verbindungsbereich der Lenkstange (31) mit den Schwenkbalken (26, 26') die Haltepositionen einzeln gespeichert ist.

## Claims

1. Machine for picking up and treating arable soil (B) in particular containing stones, clods or similar solids, comprising a separating device (5) which has a frame (4) or similar mounting and which forms, together with respective separating rollers (6, 6'), screen belts (7) or similar sorting assemblies arranged behind one another in the operating direction (A), a separating section (S, S') for the picked up arable soil (B), which is processed to form even embankment soil (3) that is largely free of stones and clods and in the process the solids are separated out, **characterised in that** the arable soil (B; B', B") can already be broken up in the region upstream of the separating section (S) of the separating device (5), the separating device (5) comprising a picking up apparatus (9, 9') that picks up and breaks up the arable soil (B), and said apparatus being provided with at least one loosening tool (10) that can be driven in order to pick up and/or break up the soil.

2. Machine according to claim 1, **characterised in that** said machine (1) can pick up a soil structure formed of a prepared arable soil layer (B") and a soil layer (B") located therebeneath, can break up said soil structure in the process and thus pass a broken-up mixture (G) to the separating section (S) via a first sorting assembly (6').

3. Machine according to either claim 1 or claim 2, **characterised in that** respective fine particles (F, F') of the soil structure can already be separated in the breaking-up region as embankment soil (3) that can be deposited under the machine (1) and the mixture (G) containing solids, clod particles or the like can be conveyed to the separating section (S, S').

4. Machine according to any of claims 1 to 3, **characterised in that** the picking up apparatus (9, 9') can be set to respective functional layers which cause the arable soil (B) to break up upstream of the separating section (S, S')

5. Machine according to any of claims 1 to 4, **characterised in that** the picking up apparatus (9, 9') can be moved by means of a drive.

6. Machine according to any of claims 1 to 5, **characterised in that** the arable soil (B) or the multi-layered soil structure (B, B') can be directly contacted by the loosening tool (10).

7. Machine according to claim 6, **characterised in that** the loosening tool (10) interacts with at least one drive (11) that imparts an oscillatory and/or rotational motion (C) on said tool.

8. Machine according to any of claims 1 to 7, **characterised in that** the loosening tool (10) is formed as a cutting roller and said roller can be driven in a direction of rotation (C) that corresponds to the operating direction (A) of the separating device (5).

9. Machine according to claim 8, **characterised in that** the direction of rotation (C) of the loosening tool (10) can be reversed at least during a cleaning phase.

10. Machine according to any of claims 1 to 9, **characterised in that** the loosening tool (10) can be driven independently of the assemblies of the downstream separating section (S).

11. Machine according to any of claims 1 to 10, **characterised in that** the loosening tool (10) comprises a drive connection (11) towards a downstream assembly (6') of the separating section (S).

12. Machine according to any of claims 1 to 11, **characterised in that** the loosening tool (10) is provided with a plurality of star bodies (13) that are interchangeably arranged on an axle (12) in a row.

13. Machine according to claim 12, **characterised in that** the star bodies (13') that are arranged in a row can be fixed both axially and radially by means of spacers (20) interposed therebetween.

14. Machine according to either claim 12 or claim 13, **characterised in that** the star bodies (13), which have a picking up opening (20') that is open in the shape of a U, can be fixed by means of a plug-in connection (44, 44', 45, 45') using the spacers (20).

15. Machine according to any of claims 1 to 14, **characterised in that** the picking up apparatus (9) comprises a cutting plate (14) that engages under the arable soil (B) or the soil layering (B', B") in the manner of a blade and said cutting plate interacts with the downstream loosening tool (10).

16. Machine according to claim 15, **characterised in that** the cutting plate (14) can be driven (drive 15) and/or adjusted (arrow P).

17. Machine according to either claim 15 or claim 16, **characterised in that** the distance between the cutting plate (14) and the loosening tool (10) can be changed.

18. Machine according to any of claims 15 to 17, **characterised in that** the cutting plate (14) is formed of several parts so as to have a front plate part (16) and a rear plate part (17), and the rear plate part (17) has a comb-like structure (18) though which respective star bodies (13) of the loosening tool (10) pass.

19. Machine for picking up and treating arable soil, comprising in particular adjustable separating rollers (6) in the region of the separating section (S) according to any of claims 1 to 18, **characterised in that** the separating rollers (6, 6') can be moved individually.

20. Machine according to claim 19, **characterised in that** the separating section (S) comprises respective screen gaps (X, X") between adjacent separating rollers (6, 6'), which screen gaps vary to different extents due to wear and can be individually reset to a provided size.

21. Machine according to either claim 19 or claim 20, **characterised in that** a plurality of the separating rollers (6) are connected by an actuating assembly (24, 24') that causes the simultaneous movement of said rollers by actuating distances that are individually preset in each case.

22. Machine according to any of claims 19 to 21, **characterised in that** the actuating assembly (24) supports the separating rollers (6) on respective end pivot bars (26, 26') and said separating rollers are connected in a chain-like manner to at least one actuator (25) by means of respective guide rods (27, 27').

23. Machine according to any of claims 19 to 22, **characterised in that** the adjustable separating rollers (6) are connected in the region of the actuating assembly (24') that comprises the drive (25) by means of an additional control assembly (30).

24. Machine according to any of claims 19 to 23, **characterised in that** the screen gaps that can vary in the operating direction (arrow A) of the separating section (S) owing to reduced wear can be preset by means of the control assembly (30) formed as a steering rod (31).

25. Machine according to claim 24, **characterised in that**, for each of the separating rollers (6), the stop positions are separately stored by respective pin-groove connections (36, 37, 38) in the region where the steering rod (31) and the pivot bars (26, 26') connect.

## Revendications

1. Machine de réception et de traitement d'une terre agricole (B) contenant en particulier des pierres, des mottes de terre ou des corps solides analogues, la machine comprenant une unité de séparation (5) qui comporte un châssis (4) ou un support analogue (5) et qui forme, successivement le sens de travail (A), avec des rouleaux de séparation (6, 6'), des bandes de tamisage (7) ou des modules de tri analogues respectifs, une section de séparation (S, S') destinée à la terre agricole (B) qui est traité sous forme meuble pour donner une terre de remblai (3) quasiment sans pierres ni mottes de sorte que les corps solides sont séparés, **caractérisée en ce que** la terre agricole (B ; B', B") peut être ameublie déjà dans la zone située en avant de la section de séparation (S) de l'unité de séparation (5), le séparateur (5) comportant un dispositif de réception (9, 9') recevant et ameublissant la terre agricole (B) et ce dispositif de réception étant muni d'au moins un outil d'ameublissement (10) entraînable en vue de la réception et/ou de l'ameublissement.

2. Machine selon la revendication 1, **caractérisée en ce que** celle-ci (1) peut recevoir la structure de terre formée d'une couche de terre agricole préparée (B') et d'une couche de terre sous-jacente (B"), ameublir cette structure de terre et donc introduire un mélange ameubli (G) dans la section de séparation (S) par le biais d'un premier module de tri (6').

3. Machine selon la revendication 1 ou 2, **caractérisée en ce que**, déjà dans la zone d'ameublissement, de fines parties respectives (F, F') de la structure de terre peuvent être séparées sous forme de terre de remblai (3) déposée sous la machine (1) et le mélange (G) contenant des corps solides, des mottes de terre ou analogues peut être amené à la section de séparation (S, S).

4. Machine selon l'une des revendications 1 à 3, **caractérisée en ce que** le dispositif de réception (9, 9') peut être réglé sur des positions fonctionnelles respectives permettant d'ameublir la terre agricole (B) en avant de la section de séparation (S, S').

5. Machine selon l'une des revendications 1 à 4, **caractérisée en ce que** le dispositif de réception (9, 9') peut être déplacé au moyen d'un entraînement.

6. Machine selon l'une des revendications 1 à 5, **caractérisée en ce que** la terre agricole (B) ou la structure de terre multicouches (B, B') peut être détectée directement au moyen de l'outil d'ameublissement (10).

7. Machine selon la revendication 6, **caractérisée en ce que** l'outil d'ameublissement (10) coopère avec au moins un entraînement (11) communiquant à celui-ci un mouvement d'oscillation et/ou de rotation (C).

8. Machine selon l'une des revendications 1 à 7, **caractérisée en ce que** l'outil d'ameublissement (10) est réalisée à la manière d'un rouleau de coupe et celui-ci peut être entraîné dans le sens de rotation (C) correspondant au sens de travail (A) du dispositif de séparation (5).

9. Machine selon la revendication 8, **caractérisée en ce que** le sens de rotation (C) de l'outil d'ameublissement (10) peut être commuté au moins dans une phase de nettoyage.

10. Machine selon l'une des revendications 1 à 9, **caractérisée en ce que** l'outil d'ameublissement (10) peut être entraîné indépendamment des modules de la section de séparation (S) disposée en aval.

11. Machine selon l'une des revendications 1 à 10, **caractérisée en ce que** l'outil d'ameublissement (10) comporte une liaison d'entraînement (11) en direction d'un module (6'), disposé en aval, de la section de séparation (S).

12. Machine selon l'une des revendications 1 à 11, **caractérisée en ce que** l'outil d'ameublissement (10) est muni d'une pluralité de corps en étoile (13) disposés en série de façon interchangeable sur un axe (12).

13. Machine selon la revendication 12, **caractérisée en ce que** les corps en étoile (13') disposés en série sont peuvent être fixés axialement et radialement par des entretoises intermédiaires (20).

14. Machine selon la revendication 12 ou 13, **caractérisée en ce que** les corps en étoile (13), comportant une ouverture de réception (20') ouverte en forme de U, peuvent être fixés par une liaison par enfichage (44, 44', 45, 45') au moyen des entretoises (20).

15. Machine selon l'une des revendications 1 à 14, **caractérisée en ce que** le dispositif de réception (9) comporte une plaque de coupe (14) s'engageant sous la terre agricole (B) ou la couche de terre (B', B") à la manière d'un soc et cette plaque de coupe coopère avec l'outil d'ameublissement (10) disposé en aval.

16. Machine selon la revendication 15, **caractérisée en ce que** la plaque de coupe (14) peut être entraînée (entraînement 15) et/ou réglée (flèche P).

17. Machine selon la revendication 15 ou 16, **caractérisée en ce que** la distance entre la plaque de coupe (14) et l'outil d'ameublissement (10) est variable.

18. Machine selon l'une des revendications 15 à 17, **caractérisée en ce que** la plaque de coupe (14) est conçue en plusieurs parties avec une partie avant et une partie arrière (16, 17) et la partie arrière (17) a une structure en peigne (18) traversée par des corps en étoile (13) respectifs de l'outil d'ameublissement (10).

19. Machine de réception et de traitement de terre agricole, comprenant en particulier des rouleaux de séparation (6) réglables dans la zone de la section de séparation (S) selon l'une des revendications 1 à 18, **caractérisée en ce que** les rouleaux de séparation (6, 6') peuvent être déplacés individuellement.

20. Machine selon la revendication 19, **caractérisée en ce que** la section de séparation (S) comporte, entre des rouleaux de séparation (6, 6') adjacents, des fentes de tamisage (X', X") respectives qui varient différemment selon l'usure et **en ce que** celles-ci sont réglables individuellement à une dimension prévue.

21. Machine selon la revendication 19 ou 20, **caractérisée en ce qu'**une pluralité de rouleaux de séparation (6) sont reliées par un module de réglage (24, 24') provoquant leur déplacement simultané sur des parcours de réglage prédéterminables individuellement.

22. Machine selon l'une des revendications 19 à 21, **caractérisée en ce que** le module de réglage (24) supporte les rouleaux de séparation (6) au niveau de poutres pivotantes respectives (26, 26') situées aux extrémités et ces barres sont reliées par des barres de guidage respectives (27, 27') à au moins un actionneur (25) à la manière d'une chaîne.

23. Machine selon l'une des revendications 19 à 22, **caractérisée en ce que** les rouleaux de séparation réglables (6) sont reliés, au niveau du module de réglage (24') comportant l'entraînement (25), au moyen d'un module de commande supplémentaire (30).

24. Machine selon l'une des revendications 19 à 23, **caractérisée en ce que** les fentes de tamisage, variables par usure décroissante dans le sens de travail (flèche A) de la section de séparation (S), sont prédéterminées au moyen du module de commande (30) conçu comme une barre de direction (31).

25. Machine selon la revendication 24, **caractérisée en ce que** les positions de retenue sont mémorisées individuellement pour chacun des rouleaux de séparation (6) par une liaison à broche et gorge respective (36, 37, 38) dans la zone de liaison de la barre de direction (31) avec les poutres pivotantes (26, 26').
